# EUROPÄISCHE PATENTANMELDUNG

(11) **EP 1 627 993 A1**
(43) Veröffentlichungstag der Anmeldung: **22.02.2006**
(21) Anmeldenummer: 04405513.5
(22) Anmeldetag: 16.08.2004
(51) Int. Cl.: F01D 25/00

(54) **Reinigungsvorrichtung für eine Abgasturbine**

(71) Anmelder: ABB Turbo Systems AG, 5400 Baden (CH)
(72) Erfinder: Schellenberg, Peter, 5400 Baden (CH); Behrendt, Detlef, 79790 Rheinheim (DE); Bättig, Josef, 5704 Egliswil (CH); Jung, Michael, 79761 Waldshut-Tiengen (DE); Müller, Ferdinand, 79774 Albbruck-Buch (DE)
(74) Vertreter: ABB Patent Attorneys

(57) **Zusammenfassung**

Die Reinigungsvorrichtung für die Abgasturbine umfasst stromauf des Düsenrings (4) in den Strömungskanal (2) mündende Öffnungen (51) zum Einspritzen einer Reinigungsflüssigkeit (6) in den Strömungskanal, einen mit den Öffnungen verbundenen Hohlraum (52) für die Verteilung der Reinigungsflüssigkeit auf die Öffnungen und eine Zuführleitung (54) zum Zuführen der Reinigungsflüssigkeit zum Hohlraum.

Mit der erfindungsgemässen Reinigungsvorrichtung wird eine gleichmässige Wasserverteilung am Düsenring bzw. an den Laufschaufeln des Turbinenlaufrades erreicht.

## Beschreibung

### Technisches Gebiet

Die Erfindung bezieht sich auf das Gebiet der Abgasturbinen für Verbrennungsmotoren. Sie betrifft eine Reinigungsvorrichtung zum Reinigen einer Abgasturbine gemäss dem Oberbegriff des Patentanspruchs 1, sowie eine Leitvorrichtung für eine Abgasturbine gemäss dem Oberbegriff des Patentanspruchs 11.

### Stand der Technik

Abgasturbinen, insbesondere in Abgasturboladern, werden in Verbindung mit einem Verbrennungsmotor verwendet. Das Abgas aus dem Verbrennungsmotor wird als Antriebsmittel zum antreiben des Turbinenrades benutzt. Das Turbinenrad ist durch eine Welle mit dem Verdichterrad verbunden mit welchem die Ansaugluft, die dem Verbrennungsmotor zugeführt wird, komprimiert wird. Das auf die Laufschaufeln der Abgasturbine geführte Abgas enthält Verunreinigungen, welche durch unvollständige Verbrennung und durch Kraftstoffverunreinigungen verursacht werden. Die Menge an Verunreinigungen, die der Verbrennungsmotor mit dem Abgas abgibt, ist stark vom verwendeten Kraftstoff abhängig. Wird ein schmutziger Kraftstoff verwendet, beispielsweise schweres Dieselöl, dann können beträchtliche Mengen an Verunreinigungen mit dem Abgas abgegeben werden.

Die Verunreinigungen im Abgas führen zu Ablagerungen auf den Turbinenschaufeln und insbesondere den Leitelementen (Leitschaufeln) der Leitvorrichtung (Düsenring), welche den Turbinenschaufeln im Strömungskanal vorgeschalteten sind.

Um einen dauerhaft störungsfreien Betrieb bei voller Leistungsfähigkeit gewährleisten zu können, müssen die verunreinigten Teile, d.h. die Turbinenschaufeln und insbesondere die Leitelemente der Leitvorrichtung, in regelmässigen Abständen mittels einer in den Abgasstrom im Strömungskanal eingespritzten Reinigungsflüssigkeit von den Ablagerungen befreit werden.

Aus DE 35 15 825 ist eine Vorrichtung zum Reinigen der Turbinenschaufeln eines Abgasturboladers bekannt, bei der mittels Wasserinjektoren und Wassereinspritzdüsen Wasser stromaufwärts der Leitelemente in den Abgasstrom eingespritzt wird. Das Wasser wird von einer Hochdruck-Wasserversorgung über eine Wasserleitung zu den einzelnen Wasserinjektoren geleitet, welche dann den geeigneten Strom von Tröpfchen für das Reinigen liefert. Wasserleitung, -injektoren und -einspritzdüsen sind ausserhalb des den Strömungskanal bildenden Gehäuseteile angeordnet und als separate Bauteile realisiert.

### Kurze Darstellung der Erfindung

Die Aufgabe der Erfindung besteht darin, eine vereinfachte Reinigungsvorrichtung der Eingangs genannten Art zu schaffen, mit der eine gleichmässige Wasserverteilung an der Leitvorrichtung erreicht wird.

Die Aufgabe wird mit einer Reinigungsvorrichtung mit den Merkmalen des Patentanspruchs 1 gelöst.

Erfindungsgemäss sind dabei Mittel zum Einspritzen in Strömungsrichtung im Bereich des Strömungskanals unmittelbar vor oder auf der Höhe der Leitvorrichtung angeordnet. Die Mittel zum Einspritzen umfassen in den Strömungskanal mündende Öffnungen zum Einspritzen der Reinigungsflüssigkeit in den Strömungskanal, einen mit den Öffnungen verbundenen, umlaufenden Hohlraum für die Verteilung der Reinigungsflüssigkeit auf die Öffnungen und eine Zuführleitung zum Zuführen der Reinigungsflüssigkeit zum Hohlraum umfassen.

Mit dem rotationssymmetrisch um die Rotationsachse der Abgasturbine angeordneten Hohlraum wird die Reinigungsflüssigkeit gleichmässig auf die gesamte Leitvorrichtung verteilt. Mit den unmittelbar vor oder auf gleicher Höhe mit der Leitvorrichtung angeordneten Öffnungen zum Einspritzen der Reinigungsflüssigkeit wird die Reinigungsflüssigkeit direkt auf die der Verschmutzung am stärksten ausgesetzten Leitelemente gerichtet, was eine wirkungsvollere Reinigung ermöglicht. Zudem wird das umliegende, den Strömungskanal begrenzende Turbinengehäuse thermisch weniger stark belastet, wenn die relativ kalte Reinigungsflüssigkeit nicht oder nur in geringem Ausmass mit den heissen Gehäusewänden in Berührung kommt.

Weitere Vorteile ergeben sich aus den abhängigen Ansprüchen.

### Kurze Beschreibung der Zeichnungen

Nachfolgend sind verschiedene Ausführungsformen der erfindungsgemässen Reinigungsvorrichtung anhand von Figuren genauer erläutert. Hierbei zeigt:
- Fig. 1: eine erste Ausführungsform der erfindungsgemässen Reinigungsvorrichtung mit einem radial innenliegenden Hohlraum,
- Fig. 2: eine zweite Ausführungsform der erfindungsgemässen Reinigungsvorrichtung mit einem radial aussenliegenden Hohlraum,
- Fig. 3: eine dritte Ausführungsform der erfindungsgemässen Reinigungsvorrichtung mit einem in der Leitvorrichtung integrierten Hohlraum,
- Fig. 4: eine vierte Ausführungsform der erfindungsgemässen Reinigungsvorrichtung mit einem zentral angeordneten Hohlraum und Zuleitungsröhrchen zu den Öffnungen,
- Fig. 5: eine erste Variante einer fünften Ausführungsform der erfindungsgemässen Reinigungsvorrichtung mit einem zentral angeordneten Hohlraum und zwischen zwei Scheiben ausgebildeten Zuleitungskanälen zu den Öffnungen, und
- Fig. 6 bis 8: detailliertere Darstellungen einer zweiten Variante der fünften Ausführungsform nach Fig. 5.

### Weg zur Ausführung der Erfindung

Die erfindungsgemässe Reinigungsvorrichtung umfasst einen zylinder- oder ringförmig um die Zentralachse der Abgasturbine angeordneten Hohlraum und mit diesem Hohlraum direkt oder über Zuleitungen verbundene Öffnungen, welche in den Strömungskanal münden. Der Hohlraum ist über eine Zuleitung mit einer Pumpe verbunden. Mit dieser wird die Reinigungsflüssigkeit (Wasser, allenfalls mit einem die Reinigungswirkung verstärkenden Zusatz versehen) mit Hochdruck in den Hohlraum und durch die Öffnungen in den Strömungskanal gepumpt. Die Druckverteilung im Hohlraum und die Verteilung der Öffnungen entlang des Umfangs des Strömungskanals sorgen für eine gleichmässige Verteilung der Reinigungsflüssigkeit und somit eine gleichmässige Reinigung der Leitvorrichtung.

Der Hohlraum kann integral in einem den Strömungskanal (??) begrenzenden Gehäuseteil, oder thermisch entkoppelt in einem zusätzlichen, separaten, ebenfalls zumindest teilweise den Strömungskanal begrenzenden Bauteil, einem Hohlring, ausgebildet sein. Ist der Hohlraum in einem der bei herkömmlichen Abgasturbinen vorhandenen Gehäuseteile angeordnet, hat dies den Vorteil, dass für die Reinigung nicht ein zusätzliches Bauteil vorgesehen werden muss. Andererseits kann ein separates Bauteil in einer bestehenden Abgasturbine nachgerüstet bzw. im Falle übermässiger Abnützung oder eines Defekts einfach ersetzt werden.

Da die Reinigungsflüssigkeit in Strömungsrichtung des Abgasstromes stromauf direkt vor oder auf der Höhe der Leitvorrichtung (Düsenring) in den Strömungskanal eingespritzt wird, kann verhindert werden, dass zuviel der relativ kalten Reinigungsflüssigkeit in Berührung mit den heissen, den Strömungskanal mehrheitlich begrenzenden Turbinengehäuseteilen kommt. Der die Lebensdauer der Gehäuseteile in negativer Weise beeinflussende Kälteschock beim Reinigen der Leitvorrichtung kann somit vermieden werden. Dafür kann es vorkommen, dass sich die Reinigungsflüssigkeit bis zum Auftreffen auf die der Strömung ausgesetzten Oberflächen der Leitelemente (Leitschaufeln) der Leitvorrichtung nicht gleichmässig in der Strömung verteilt. Daher ist es vorteilhaft, wenn für jedes der Leitelemente mindestens eine Öffnung vorhanden ist, durch welche die Reinigungsflüssigkeit auf das jeweilige Leitelement gespritzt wird. Gegebenenfalls kann durch ein beidseitiges Einspritzen der Reinigungsflüssigkeit in den Strömungskanal die Reinigungseffizienz noch gesteigert werden. Hierfür sind sowohl am radial inneren als auch am radial äusseren Rand des Strömungskanals Öffnungen vorgesehen, durch welche von dahinterliegenden Hohlräumen aus die Reinigungsflüssigkeit in den Strömungskanal gespritzt wird.

Öffnungen, Hohlraum und gegebenenfalls die Zuleitungen vom Hohlraum zu den Öffnungen können auch durch zwei- oder mehrteilige Bauteile gebildet werden. Beispielsweise kann ein scheibenförmiges, flaches Element derart mit einem T-Scheibenelement mit einer rohrförmigen Zuleitung im Zentrum verbunden werden, dass zwischen dem Element und der T-Scheibe ein zentraler Hohlraum und ein umlaufender, radial nach aussen führender Spalt oder aber bei einer entsprechenden Oberflächenprofilierung entweder des flachen Elements oder der T-Scheibe kanalförmige Zuleitungen an den radial äusseren Rand gebildet werden. Durch den umlaufenden Spalt oder die Öffnungen am Ende der Zuführkanäle wird wiederum die Reinigungsflüssigkeit in den Strömungskanal gespritzt.

Alle Figuren zeigen schematisch einen entlang der Rotationsachse (gestrichpunktete Linie) des Turbinenrads 3 geführten Schnitt durch eine Abgasturbine mit einer jeweils unterschiedlichen Ausführungsform der erfindungsgemässen Reinigungsvorrichtung. Die Figuren zeigen den Bereich des Strömungskanals 2, in welchem das Abgas in Pfeilrichtung über die Leitvorrichtung (Düsenring) 4 auf die Laufschaufeln 31 des Turbinenrades geführt wird. Andeutungsweise sind radial aussenliegende Teile 11 und radial innenliegenden Teile 12 des Turbinengehäuses dargestellt.

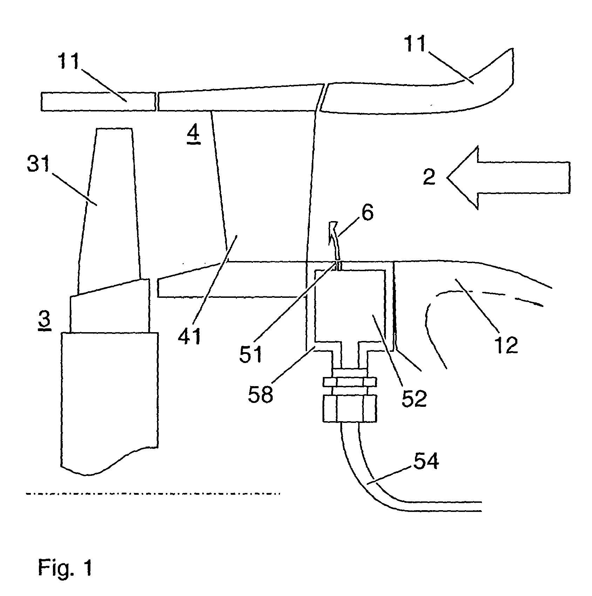

Die erste Ausführungsform der erfindungsgemässen Reinigungsvorrichtung gemäss Fig. 1 umfasst einen radial innerhalb des Strömungskanals 2 angeordneten Hohlraum 52 zur Aufnahme der Reinigungsflüssigkeit. Der Hohlraum ist rotationssymmetrisch um die Achse des Turbinenrades angeordnet und kann, wie in der Figur dargestellt, in einem separaten Bauteil, einem Hohlring 58, ausgebildet, oder aber integral in einem Turbinengehäuseteil 12 eingeschlossen sein. Vom Hohlraum 52 ausgehend sind die Öffnungen 51 vorgesehen, durch welche die Reinigungsflüssigkeit 6 in den Strömungskanal 2 eingespritzt werden kann. Der Hohlring 58 ist über eine oder mehrere Zuleitungen 54 mit einer Pumpe für die Reinigungsflüssigkeit verbunden.

Beim Reinigen der Leitvorrichtung wird die Reinigungsflüssigkeit mit hohem Druck über die Zuleitungen 54 in den Hohlraum 52 gepumpt. Das Reinigungsmittel verteilt sich im Hohlraum, füllt ihn und tritt dann über die Öffnungen 51 in den Strömungskanal 2 ein. Über den Druck sowie über Form, Grösse und Ausrichtung der Öffnungen lässt sich einstellen, wie die Reinigungsflüssigkeit in den Strömungskanal eingespritzt werden soll. Wie bereits erwähnt wird die Reinigungsflüssigkeit dank der erfindungsgemässen Anordnung der Öffnungen unmittelbar stromauf der Leitvorrichtung hauptsächlich auf die Leitvorrichtung treffen und nicht mit den weiter Stromaufwärts den Strömungskanal begrenzenden Gehäuseteile in Berührung kommen.

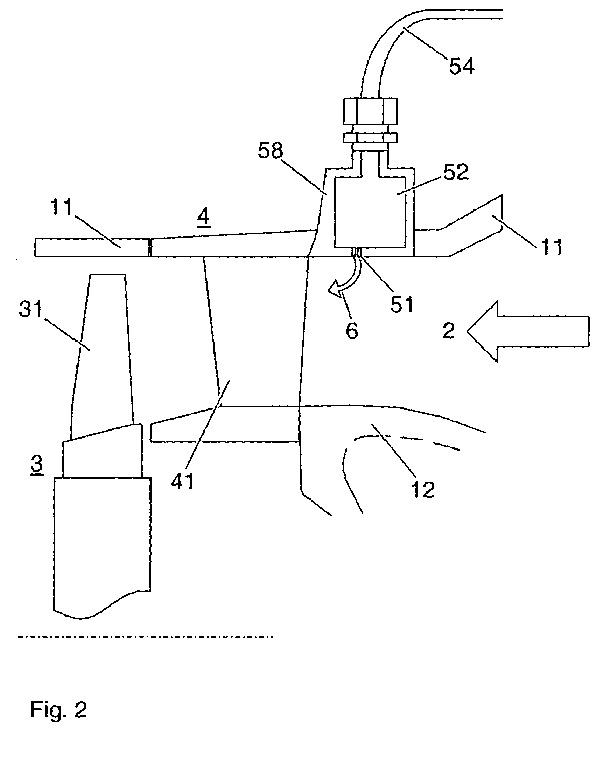

Die zweite Ausführungsform der erfindungsgemässen Reinigungsvorrichtung gemäss Fig. 2 umfasst einen radial ausserhalb des Strömungskanals 2 angeordneten Hohlraum 52 zur Aufnahme der Reinigungsflüssigkeit. Der Hohlraum ist ebenfalls rotationssymmetrisch um die Achse des Turbinenrades angeordnet und kann wiederum, in einem separaten Bauteil, einem Hohlring 58, ausgebildet sein, oder aber integral in einem Turbinengehäuseteil 11 eingeschlossen sein.

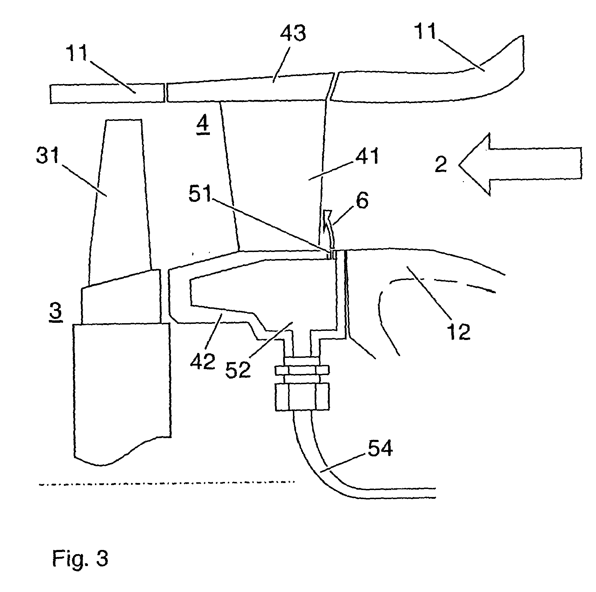

Bei der dritten Ausführungsform der erfindungsgemässen Reinigungsvorrichtung gemäss Fig. 3 ist der Hohlraum 52 zur Aufnahme der Reinigungsflüssigkeit in einem Gehäuseteil der Leitvorrichtung angeordnet. Die dargestellte Leitvorrichtung (Düsenring) umfasst zwei ringförmige Gehäuseteile 42 und 43. Zwischen diesen beiden Gehäuseteilen sind die mehreren Leitelemente (Leitschaufeln) angeordnet. Alternativ kann die Leitvorrichtung auch nur aus einem Gehäuseteil mit daran befestigten Leitelementen gebildet sein.

Diese dritte Ausführungsform der erfindungsgemässen Reinigungsvorrichtung ist durch einen sehr einfachen und kompakten Aufbau gekennzeichnet und ermöglicht auf einfachste Art eine absolut gleichmässige Wasserverteilung. Zudem eignet sich diese dritte Ausführungsform ganz besonders gut zur Nachrüstung bestehender Abgasturbinen. Anstelle der bisherigen Leitvorrichtung wird einfach die erfindungsgemäss um einen Hohlraum mit Öffnungen zum Strömungskanal hin erweiterte Leitvorrichtung eingesetzt. Je nach Bedarf und Zuführmöglichkeit für die Reinigungsflüssigkeit kann dabei der Hohlraum im radial innenliegenden Gehäuseteil oder im radial aussenliegenden Gehäuseteil der Leitvorrichtung oder gar in beiden integriert sein.

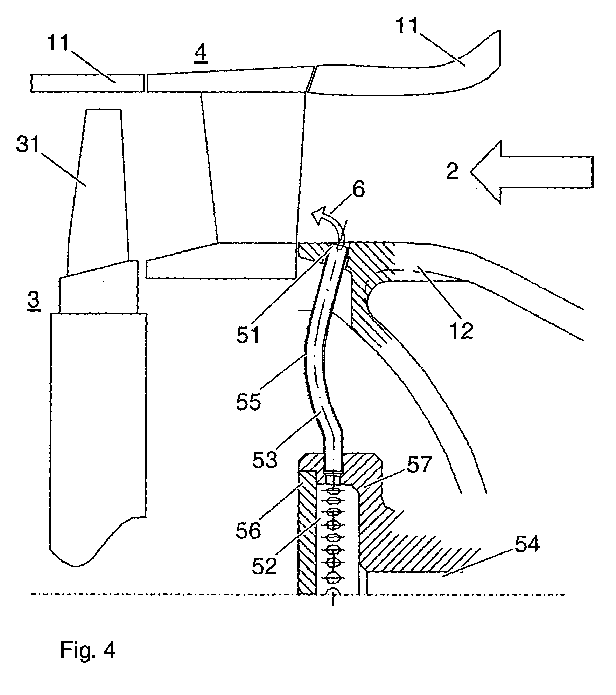

Bei der vierten Ausführungsform der erfindungsgemässen Reinigungsvorrichtung gemäss Fig. 4 ist der Hohlraum 52 zur Aufnahme der Reinigungsflüssigkeit zentral und mit einigem radialen Abstand zum Strömungskanal angeordnet. Die Reinigungsflüssigkeit wird über Zuleitungen 53 in einzelnen Röhrchen 55 in den Strömungskanal 2 geleitet. Der Hohlraum 52 wird durch ein Hohlraumgefäss 57 gebildet, welches mit einem Deckel 56 verschlossen ist und über einen Anschluss zum Zuführen der Reinigungsflüssigkeit in den Hohlraum und über mehrere Öffnungen zum Anschliessen der Röhrchen verfügt.

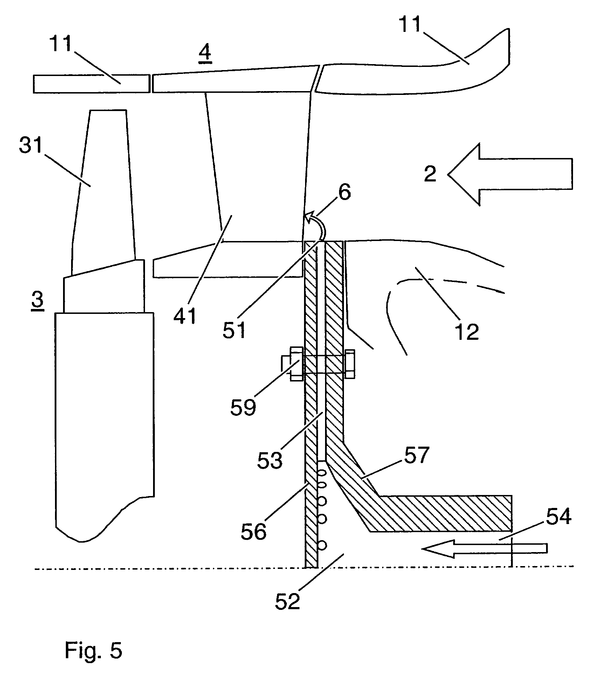

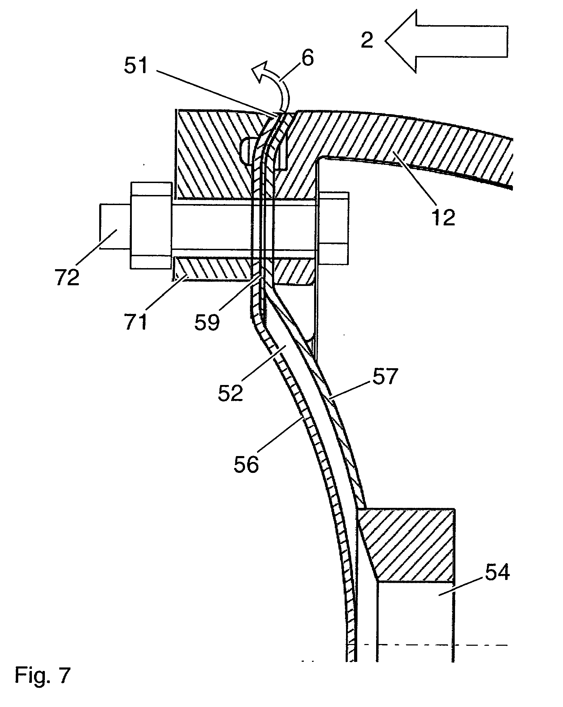

Bei der fünften Ausführungsform der erfindungsgemässen Reinigungsvorrichtung gemäss der Figuren 5 bis 8 ist der Hohlraum 52 zur Aufnahme der Reinigungsflüssigkeit wiederum zentral und mit einigem radialen Abstand zum Strömungskanal angeordnet. Der Hohlraum 52 und die kanalartigen Zuleitungen 53 zu den Öffnungen 51 sind zwischen zwei Elementen 56 und 57 gebildet, welche mittels Befestigungsmitteln oder auf andere Weise zusammengehaltenen werden.

In der ersten Variante gemäss Fig. 5 sind die Elemente im wesentlichen scheibenförmig, wobei es sich beim einen Element 56 um eine Art Deckel für das andere, T-förmige Element 57 handelt. Alternativ können die Elemente zumindest teilweise schräg, beispielsweise konisch, ausgebildet sein. Das T-Element 54 verfügt über einen Anschluss für die Reinigungsflüssigkeitszuführung 54. Die Zuleitungen 53 sind durch eine Profilierung der Oberfläche von einem oder beiden Elementen geformt.

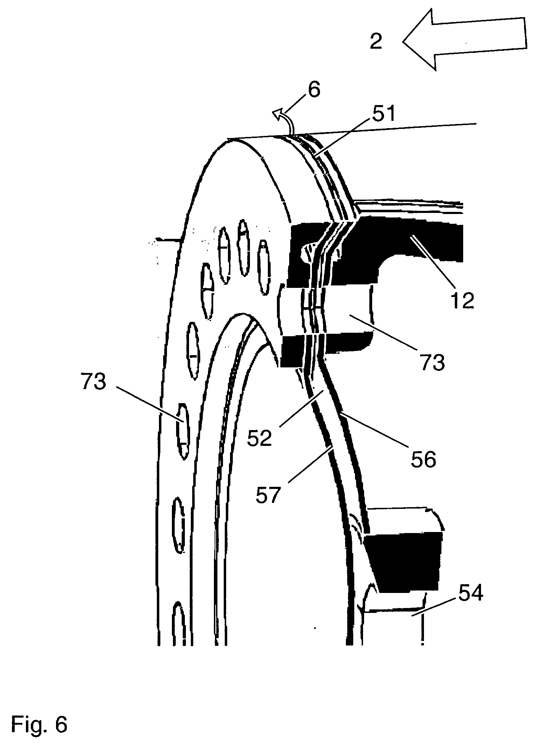

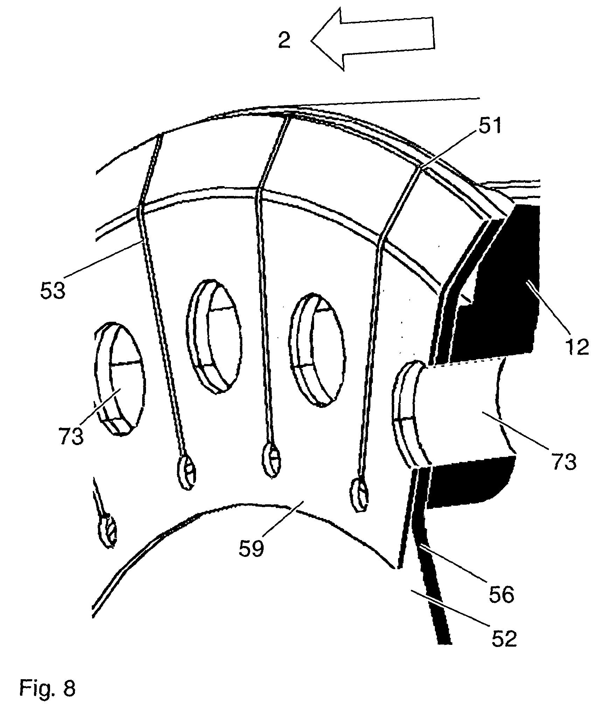

In der zweiten Variante werden die Zuleitungskanäle 53 vom Hohlraum 52 zu den Öffnungen 51 durch ein zwischen den beiden Elementen 56 und 57 angeordnetes, mit Nuten versehenes Blech 59 gebildet. In der in den Figuren 6, 7 und 8 dargestellten Variante ist das Nuten-Blech im radial äusseren Bereich der beiden Elemente 56 und 57 zwischen den beiden Elementen eingeklemmt. Die Klemmung wird durch ein mittels mehreren Schrauben oder anderen Befestigungsmittel 72 durch die vorgesehenen Befestigungslöcher 73 an einem benachbarten Gehäuseteil 12 befestigten Befestigungsring 71 bewirkt. Wie aus Fig. 8 ersichtlich ist, reicht das Nuten-Blech und die darin eingelassenen, radial nach aussen laufenden Nuten zumindest teilweise in den zwischen den Elementen 56 und 57 gebildeten Hohlraum 59 hinein. Dadurch kann die Reinigungsflüssigkeit aus dem Hohlraum in die Nuten eindringen und bis zum den am radial äusseren Rand am Ende der Nuten angeordneten Öffnungen zum Strömungskanal gelangen. Um das Eindringen der Reinigungsflüssigkeit zu vereinfachen, können die Nuten, wie dargestellt, in dem in den Hohlraum hineinreichenden Bereich ausgeweitet sein. Um den gewünschten Einspritzwinkel zu erzielen, können die Elemente 56 und 57 sowie das zwischenliegende Nuten-Blech 59 im radial äusseren Bereich gebogen oder geknickt sein.

Wie all die anderen dargestellten Ausführungsformen, kann auch die letzte Variante mit radial aussenliegenden Öffnungen realisiert werden. Der Reinigungsflüssigkeitsanschluss ist dann nicht zentral, sondern an dem äusseren Rand vorgesehen.

Alternativ zu mehreren, entlang des Umfangs verteilten Öffnungen mit entsprechenden Zuleitungskanälen können einige wenige Schlitze, oder auch nur ein einziger, umlaufender Schlitz, vorgesehen sein, durch welche die Reinigungsflüssigkeit gleichmässig über den Umfang verteilt in den Strömungskanal eingespritzt wird.

### Bezugszeichenliste

- 11,12: Turbinengehäuse
- 2: (Abgas-) Strömungskanal
- 3: Turbinenrad
- 31: Turbinenlaufschaufeln
- 4: Leitvorrichtung, Düsenring
- 41: Leitelemente, Leitschaufeln
- 42, 43: Gehäuseteile der Leitvorrichtung
- 51: Einspritzöffnungen
- 52: Hohlraum
- 53: Zuleitungen zu Öffnungen
- 54: Zuleitung zu Hohlraum
- 55: Zuleitungsröhrchen
- 56: Deckeielement
- 57: Hohlraumgefäss, T-Element
- 58: Hohlring
- 59: Nuten-Blech
- 6: Reinigungsflüssigkeit
- 71: Befestigungsring
- 72: Befestigungsmittel
- 73: Befestigungslöcher

## Patentansprüche

1. Reinigungsvorrichtung zum Reinigen einer Abgasturbine mit einem Gehäuse (11, 12), einem durch das Gehäuse zumindest teilweise begrenzten Abgasströmungskanal (2), einem mit Laufschaufeln (31) bestückten Turbinenrad (3) und einer im Strömungskanal (2) den Laufschaufeln in Strömungsrichtung vorgeschalteten Leitvorrichtung (4), wobei die Reinigungsvorrichtung Mittel (51, 52, 53, 54, 55, 56, 57) zum Einspritzen einer Reinigungsflüssigkeit (6) in den Strömungskanal (2) stromauf der Leitvorrichtung (4) umfasst,
**dadurch gekennzeichnet, dass**
die Mittel zum Einspritzen im Bereich des Strömungskanals in Strömungsrichtung unmittelbar vor oder auf der Höhe der Leitvorrichtung (4) angeordnet sind, und dass die Mittel zum Einspritzen eine oder mehrere in den Strömungskanal (2) mündende Öffnungen (51) zum Einspritzen der Reinigungsflüssigkeit (6) in den Strömungskanal (2), einen mit den Öffnungen (51) verbundenen Hohlraum (52) für die Verteilung der Reinigungsflüssigkeit (6) auf die und/ oder entlang der Öffnungen (51) und eine Zuführleitung (54) zum Zuführen der Reinigungsflüssigkeit (6) zum Hohlraum (52) umfassen.

2. Reinigungsvorrichtung nach Anspruch 1, **dadurch gekennzeichnet, dass**
der Hohlraum (52) im wesentlichen koaxial zur Rotationsachse des Turbinenrades (3) angeordnet und rotationssymmetrisch ausgebildet ist.

3. Reinigungsvorrichtung nach Anspruch 1 oder 2, **dadurch gekennzeichnet, dass**
die Öffnungen (51) über rohrförmige Zuleitungen (53) mit dem Hohlraum (52) verbunden sind.

4. Reinigungsvorrichtung nach einem der Ansprüche 1 bis 3, **dadurch gekennzeichnet, dass**
die Mittel zum Einspritzen einer Reinigungsflüssigkeit (6) zumindest einen Hohlring (58) umfassen, dass der Hohlring (58) den Strömungskanal (2) zumindest teilweise begrenzt, und dass die Öffnungen (51) zum Einspritzen der Reinigungsflüssigkeit (6) in den Strömungskanal (2) in die an den Strömungskanal grenzende Seite des Hohlrings (58) eingelassen sind.

5. Reinigungsvorrichtung nach Anspruch 4, **dadurch gekennzeichnet, dass**
die Leitvorrichtung (4) ein ringförmiges Gehäuseteil (42) sowie an dem ringförmigen Gehäuseteil befestigte Leitelemente (41) umfasst, dass in das ringförmige Gehäuseteil (42) ein ringförmiger Hohlraum (52) zur Aufnahme der Reinigungsflüssigkeit (6) eingelassen ist, und dass vom Hohlraum ausgehende Öffnungen (51) zum Spritzen der Reinigungsflüssigkeit (6) aus dem Hohlraum (52) auf die Leitelemente (41) in das ringförmige Gehäuseteil (42) eingelassen sind.

6. Reinigungsvorrichtung nach einem der Ansprüche 1 bis 3, **dadurch gekennzeichnet, dass**
die Mittel zum Einspritzen einer Reinigungsflüssigkeit mindestens zwei koaxial angeordnete, den Strömungskanal zumindest teilweise begrenzende Elemente (56, 57, 59) umfassen, welche derart ausgestaltet und miteinander verbunden sind, dass zwischen mindestens zwei der Elemente ein Hohlraum (52) und vom Hohlraum ausgehende Kanäle (53) mit einer oder mehreren in den Strömungskanal (2) mündenden Öffnungen (51) geformt sind durch welche die Reinigungsflüssigkeit (6) in den Strömungskanal (2) eingespritzt werden kann.

7. Reinigungsvorrichtung nach Anspruch 7, **dadurch gekennzeichnet, dass**
zwischen den Elementen (56, 57) eine oder einige wenige Öffnungen (51) geformt sind, welche sich schlitzartig entlang des Umfangs des Strömungskanals erstrecken.

8. Reinigungsvorrichtung nach einem der vorangehenden Ansprüche, **dadurch gekennzeichnet, dass**
die Leitvorrichtung (4) mehrere Leitelemente (41) umfasst, und dass die Mittel zum Einspritzen einer Reinigungsflüssigkeit jeweils pro Leitelement (41) mindestens eine Öffnung (51) zum Einspritzen der Reinigungsflüssigkeit (6) in den Strömungskanal (2) umfassen.

9. Reinigungsvorrichtung nach einem der vorangehenden Ansprüche, **dadurch gekennzeichnet, dass**
die Mittel zum Einspritzen einer Reinigungsflüssigkeit im Strömungskanal (2) radial innenliegende und/ oder radial aussenliegende Öffnungen (52) zum Einspritzen der Reinigungsflüssigkeit in den Strömungskanal umfassen.

10. Abgasturbolader, **gekennzeichnet durch** eine Abgasturbine mit einer Reinigungsvorrichtung nach einem der vorangehenden Ansprüche.

11. Leitvorrichtung für eine Abgasturbine, umfassend ein ringförmiges Gehäuseteil (42) sowie an dem ringförmigen Gehäuseteil befestigte Leitelemente (41), **dadurch gekennzeichnet, dass**
in das ringförmige Gehäuseteil (42) ein ringförmiger Hohlraum (52) zur Aufnahme einer Reinigungsflüssigkeit (6) eingelassen ist, und dass
vom Hohlraum ausgehende Öffnungen (51) zum Spritzen der Reinigungsflüssigkeit (6) aus dem Hohlraum (52) auf die Leitelemente (41) in das ringförmige Gehäuseteil (42) eingelassen sind.
